(19) Europäisches Patentamt
European Patent Office
Office européen des brevets

(11) EP 1 451 246 B1

(12) **FASCICULE DE BREVET EUROPEEN**

(45) Date de publication et mention de la délivrance du brevet:
**06.03.2013 Bulletin 2013/10**

(21) Numéro de dépôt: **02803791.9**

(22) Date de dépôt: **25.11.2002**

(51) Int Cl.:
***C08K 3/00*** *(2006.01)* ***C08J 3/20*** *(2006.01)*
***C08C 19/30*** *(2006.01)* ***C08L 13/00*** *(2006.01)*
***B60C 1/00*** *(2006.01)*

(86) Numéro de dépôt international:
**PCT/EP2002/013230**

(87) Numéro de publication internationale:
**WO 2003/046066 (05.06.2003 Gazette 2003/23)**

(54) **COMPOSITION DE CAOUTCHOUC POUR BANDE DE ROULEMENT DE PNEU ET SON PROCEDE D'OBTENTION**

KAUTSCHUKZUSAMMENSETZUNG FÜR REIFENLAUFFLÄCHE UND HERSTELLUNGSVERFAHREN

RUBBER COMPOSITION FOR RUNNING TREAD AND METHOD FOR OBTAINING SAME

(84) Etats contractants désignés:
**AT BE BG CH CY CZ DE DK EE ES FI FR GB GR IE IT LI LU MC NL PT SE SK TR**

(30) Priorité: **26.11.2001 FR 0115561**

(43) Date de publication de la demande:
**01.09.2004 Bulletin 2004/36**

(73) Titulaires:
- **COMPAGNIE GENERALE DES ETABLISSEMENTS MICHELIN**
  **63000 Clermont-Ferrand (FR)**
- **Michelin Recherche et Technique S.A.**
  **1763 Granges-Paccot (CH)**

(72) Inventeurs:
- **ROBERT, Pierre**
  **F-63170 Perignat-Les-Sarlieve (FR)**
- **MATHIEU, Samuel**
  **F-63000 Clermont-Ferrand (FR)**

(74) Mandataire: **Dequire, Philippe Jean-Marie Denis**
**M.F.P. Michelin,**
**SGD/LG/PI-F35-Ladoux**
**63040 Clermont-Ferrand Cedex 09 (FR)**

(56) Documents cités:
**EP-A- 0 704 481** **WO-A-01/14470**
**US-A- 2 710 292** **US-A- 3 346 631**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 451 246 B1

## Description

La présente invention concerne une composition de caoutchouc réticulable ou réticulée qui est utilisable pour constituer une bande de roulement de pneumatique et qui présente, à l'état non réticulé, une aptitude à la mise en oeuvre améliorée et, à l'état réticulé, des pertes hystérétiques minimisées et des propriétés de renforcement améliorées, ainsi qu'un procédé de préparation de cette composition. L'invention concerne également une bande de roulement de pneumatique et une enveloppe de pneumatique l'incorporant.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

Pour atteindre un tel objectif, de nombreuses solutions ont été proposées consistant notamment à modifier la structure des polymères et des copolymères diéniques en fin de polymérisation au moyen d'agents de fonctionnalisation, de couplage ou d'étoilage. La très grande majorité de ces solutions s'est concentrée sur l'utilisation de polymères fonctionnalisés qui sont actifs vis-à-vis du noir de carbone, dans le but d'obtenir une bonne interaction entre le polymère ainsi modifié et le noir de carbone.

A titre d'illustration de cet art antérieur relatif à des charges renforçantes constituées de noir de carbone, on peut par exemple citer le document de brevet américain US-A-3 135 716, qui décrit la réaction de polymères diéniques vivants en fin de chaîne avec un agent de couplage organique polyfonctionnel pour obtenir des polymères aux propriétés améliorées. On peut également citer le document de brevet américain US-A-3 244 664, qui divulgue l'utilisation de tétra alcoxysilanes, à titre d'agent de couplage ou d'étoilage de polymères diéniques.

L'utilisation de silice à titre de charge renforçante dans des compositions de caoutchouc réticulables, notamment destinées à entrer dans la constitution de bandes de roulement de pneumatique, est ancien. Cependant, cette utilisation est restée très limitée, en raison du niveau insatisfaisant de certaines propriétés physiques de telles compositions, notamment la résistance à l'abrasion.

C'est la raison pour laquelle il a été proposé d'utiliser, pour pallier ces inconvénients, des polymères diéniques fonctionnalisés à la place des polymères non fonctionnalisés qui étaient antérieurement utilisés, et en particulier des polymères fonctionnalisés par des dérivés alcoxysilanes, tels que des tétra éthoxysilanes. On peut par exemple citer le document de brevet américain US-A-5 066 721, qui décrit une composition de caoutchouc comprenant un polymère diénique fonctionnalisé par un alcoxysilane ayant au moins un reste alcoxyle non hydrolysable, ce qui permet l'élimination du solvant de polymérisation par un stripping à la vapeur d'eau.

Un inconvénient de ces réactions de fonctionnalisation réside dans les réactions de couplage qui les accompagnent, ce qui impose généralement d'utiliser un excès d'alcoxysilane et/ou un mélangeage intense, pour minimiser ces réactions de couplage.

Un autre inconvénient de ces réactions réside dans la mise en oeuvre ultérieure de l'opération de stripping à la vapeur d'eau, qui est nécessaire pour éliminer le solvant de polymérisation.

En effet, d'une manière générale, l'expérience montre que les polymères fonctionnalisés obtenus subissent des évolutions de macrostructure lors de cette opération de stripping, ce qui conduit à une sévère dégradation de leurs propriétés, à moins de se limiter à utiliser à titre d'agent de fonctionnalisation un alcoxysilane appartenant à une famille restreinte, telle que celle qui est décrite dans le document précité US-A-5 066 721.

Par conséquent, il ressort de ce qui précède que l'utilisation de polymères diéniques comprenant une fonction alcoxysilane pour obtenir des compositions de caoutchouc comprenant de la silice à titre de charge renforçante n'est pas satisfaisante, en dépit des propriétés physiques améliorées de ces compositions.

C'est la raison pour laquelle des recherches ont été menées sur d'autres réactions de fonctionnalisation, toujours en vue de l'obtention de telles compositions de caoutchouc.

A titre d'exemple, on peut citer le document de brevet français FR-A-2 740 778 au nom de la demanderesse, qui divulgue l'incorporation à des compositions de caoutchouc comprenant à titre de charge renforçante de la silice à titre majoritaire (par exemple comprenant un coupage de silice et de noir de carbone), de polymères diéniques portant en extrémité de chaîne une fonction silanol ou un bloc polysiloxane ayant une extrémité silanol. On utilise par exemple un agent de fonctionnalisation constitué d'un polysiloxane cyclique, tel que l'hexaméthylcyclotrisiloxane. Les polymères fonctionnalisés obtenus peuvent être séparés du milieu réactionnel conduisant à leur formation par extraction à la vapeur d'eau du solvant, sans que leur macrostructure et, par conséquent, leurs propriétés physiques n'évoluent.

On peut également citer le document de brevet européen EP-A-877 047, qui divulgue l'incorporation de tels polymères à fonction silanol à des compositions de caoutchouc comprenant à titre de charge renforçante du noir de carbone ayant de la silice fixée à sa surface.

On a pu établir que ces polymères confèrent des propriétés de caoutchouterie, notamment hystérétiques et

de renforcement à l'état réticulé, qui sont améliorées par rapport à celles de compositions « témoin » à base de polymères diéniques non fonctionnels, et qui sont au moins analogues à celles de compositions à base de polymères diéniques à fonction alcoxysilane.

On peut également citer le document de brevet européen EP-A-692 493, qui établit que des polymères diéniques portant en extrémité de chaîne des groupements alcoxysilanes ainsi qu'un groupement époxy conduisent à des propriétés de renforcement améliorées et à des pertes hystérétiques réduites aux petites et grandes déformations.

Un inconvénient de ces polymères, qui comportent un groupe fonctionnel actif pour un couplage à de la silice ou à du noir de carbone modifié en surface par de la silice, est que l'amélioration des propriétés d'hystérèse et de renforcement qu'ils confèrent aux compositions de caoutchouc les incorporant s'accompagne généralement d'une aptitude à la mise en oeuvre des mélanges non réticulés qui est pénalisée par rapport à celle de polymères « témoin » non fonctionnels.

Parmi les autres réactions de fonctionnalisation étudiées, on peut citer la fonctionnalisation le long de la chaîne de polymères diéniques préparés en solution par des fonctions COOH.

Cette fonctionnalisation COOH le long de la chaîne peut être réalisée par métallation directe, en présence de N,N,N',N'-tétraméthyléthylènediamine (TMED), au moyen de butyl lithium ou de sodium métallique (comme cela est décrit dans les documents de brevet US-A-3978161 et US-A-3976628, respectivement), suivie d'une réaction de carbonatation au moyen de gaz carbonique.

Un tel procédé présente l'inconvénient de conduire généralement à des coupures dans la chaîne du polymère modifié.

Pour greffer des fonctions COOH le long de la chaîne d'un polymère diénique par une réaction de greffage post-polymérisation, on a également utilisé des mercaptans comportant un groupe carbonyle, tel qu'un groupe acide carboxylique (par exemple l'acide 3-mercaptopropionique), un groupe aldéhyde ou un groupe alcool primaire, et des composés aminés comportant un tel groupe carbonyle.

A titre d'exemples de ces mercaptans ou composés aminés comportant un groupe carbonyle, on peut citer respectivement deux réactifs de formules respectives $HSCH_2CO_2CH_3$ et $N_2CHCO_2CH_2CH_3$. Pour la description des mécanismes réactionnels relatifs à l'utilisation de ces deux réactifs, on pourra se reporter aux articles « K. Sanui, R.W. Lenz, W.J. MacKnight, J. Poly. Sci., Polym. Chem. Ed. 12, 1965 (1974) » et « H. Tanaka, W.J. MacKnight, J. Poly. Sci., Polym. Chem. Ed. 17, 2975 (1979) ».

Un inconvénient majeur de l'utilisation de ces mercaptans carbonylés ou amino-esters est qu'elle conduit toujours à des évolutions significatives de macrostructure caractérisées par une forte dégradation de la distribution des masses moléculaires pour le polymère modifié, ce qui rend ces réactifs indésirables dans le cadre de la présente invention.

La fonctionnalisation par des fonctions COOH le long de la chaîne peut être également mise en oeuvre au moyen de monoxyde de carbone, soit par une hydroformylation suivie d'une oxydation de l'aldéhyde formé (comme cela est décrit dans le document de brevet américain US-A-4 912 145), soit par une hydrocarboxylation directe du polymère (comme cela est décrit dans l'article « A. Nait Ajjou, H. Alper, Macromolecules 29, 1784 (1996) »). Les catalyseurs utilisés pour ces réactions sont à base de rhodium ou de palladium.

Un inconvénient de cette fonctionnalisation par le monoxyde de carbone réside, d'une part, dans le caractère drastique des conditions opératoires et, d'autre part, dans la formation fréquente d'un gel dans le milieu réactionnel.

La fonctionnalisation au moyen de l'anhydride maléique est plus répandue. Elle permet d'obtenir le long de la chaîne des motifs anhydride succinique, qui sont précurseurs des fonctions COOH, par greffage post-polymérisation. On pourra se reporter au document de brevet américain US-A-4 082 817 pour un exemple de mise en oeuvre d'une telle fonctionnalisation.

Cependant, ce type de fonctionnalisation peut également conduire à la formation d'un gel.

La polymérisation par voie radicalaire en émulsion est également connue pour donner des polymères ayant des fonctions COOH le long de la chaîne. Pour une description générale de ce type de polymérisation, on pourra se reporter à l'ouvrage « Emulsion Polymerization and Emulsion Polymers », P. A. LOVELL et M. S. EL-AASSER, John Wiley and Sons (1997), pp. 558-561 (voir également les références qui y sont citées).

On a cherché par le passé à utiliser des élastomères diéniques à fonctions COOH le long de la chaîne pour préparer des compositions de caoutchouc utilisables dans des pneumatiques, comme cela est illustré par les documents commentés ci-après.

Le document de brevet américain US-A-5 494 091 présente en effet une composition de caoutchouc chargée au noir de carbone comprenant de 25 à 55 pce de polyisoprène et de 45 à 75 pce (pce: parties en poids pour cent parties de matrice élastomère) d'un polymère diénique appartenant au groupe constitué par des homopolymères de diènes conjugués et des copolymères de diènes conjugués avec des mono-oléfines, tels que des terpolymères EPDM (d'éthylène, de propylène et d'un diène), une partie de ce polymère comportant des fonctions COOH greffées le long de la chaîne par réaction avec un sel métallique d'acide carboxylique insaturé, par exemple du diméthacrylate de zinc. La composition obtenue est censée présentée une rigidité suffisamment élevée pour son utilisation dans une gomme de renfort interne de flancs de pneumatique, de sorte à permettre le roulage à plat du pneumatique dans des conditions

satisfaisantes.

Le document de brevet WO-A-01/14470 divulgue un procédé de fabrication d'un pneumatique consistant à réticuler, lors de la cuisson du pneumatique, une composition de caoutchouc réticulable comprise dans ce pneumatique à base d'un élastomère diénique préparé en solution ou en émulsion et comportant des fonctions COOH le long de la chaîne, sans utiliser le moindre système de réticulation. Cette composition de caoutchouc réticulable comprend un liquide organique époxydé qui est destiné à permettre sa réticulation lors de la cuisson.

Ces compositions peuvent comprendre indifféremment du noir de carbone, de la silice ou toute autre charge renforçante connue dans l'industrie du pneumatique et, en référence aux exemples de réalisation de ce document, ne sont utilisés à titre d'élastomères diéniques comprenant des fonctions COOH que des élastomères présentant un taux molaire d'unités issues de diènes qui est inférieur à 15 %, tels que des caoutchoucs nitrile (copolymères de butadiène et d'acrylonitrile). L'enseignement de ce document ne concerne pas spécifiquement des compositions de caoutchouc utilisables pour constituer des bandes de roulement de pneumatique.

Par ailleurs, la demande de brevet EP 0 704 481 décrit, elle aussi, une composition de caoutchouc convenant pour les bandes de roulement de pneumatiques, à base d'un coupage de caoutchouc qui ne contient pas plus de 15 pce d'un caoutchouc nitrile carboxylé et entre 70 et 98 pce d'un caoutchouc plus conventionnel tel que du polyvinylbutadiène, caoutchouc de styrène - butadiène, polyisoprène synthétique cis 1,4, polyisoprène synthétique 3,4, caoutchouc naturel, polybutadiène cis, caoutchouc styrène - isoprène, caoutchouc styrène - isoprène - butadiène, caoutchouc acrylonitrile butadiène, ou les mélanges de ces composés.

Le but de la présente invention est de proposer une composition de caoutchouc qui présente, à l'état non réticulé, une aptitude à la mise en oeuvre améliorée et, à l'état réticulé, des pertes hystérétiques minimisées et des propriétés de renforcement améliorées, et qui soit utilisable pour pouvoir constituer à elle seule une bande de roulement d'un pneumatique.

Ce but est atteint en ce que les demanderesses ont découvert d'une manière surprenante qu'une composition de caoutchouc selon la revendication 1 présente des propriétés de renforcement améliorées et des pertes hystérétiques minimisées aux petites et aux grandes déformations, par rapport à celles présentées par des compositions connues comprenant une charge inorganique renforçante à titre de charge renforçante et étant à base d'un élastomère non fonctionnel ou bien d'un élastomère comportant le long de la chaîne des fonctions ester issues dudit comonomère précurseur, tout en possédant des propriétés de mise en oeuvre à l'état non réticulé qui sont comparables à celles de ces compositions connues.

On notera que la présente invention réside notamment dans l'interaction particulièrement avantageuse existant entre, d'une part, un élastomère diénique « essentiellement insaturé » (i.e. comportant un taux molaire d'unités issues de diènes conjugués supérieur à 30 %) ayant été préparé en émulsion et comportant des fonctions COOH le long de la chaîne introduites selon un procédé spécifique de copolymérisation, et, d'autre part, une charge inorganique renforçante, pour l'obtention d'une composition de caoutchouc réticulable ou réticulée, par exemple par l'intermédiaire d'un système de vulcanisation au soufre.

En effet, contrairement aux procédés de greffage traditionnels de fonctions COOH le long de la chaîne par une réaction post-polymérisation qui confèrent aux élastomères obtenus en émulsion une structure très ramifiée et, par conséquent, une viscosité élevée, ce qui pénalise les propriétés de caoutchouterie des compositions les incorporant, le procédé selon l'invention confère à l'élastomère obtenu en émulsion une structure plus linéaire présentant une viscosité réduite en conséquence.

Ces caractéristiques avantageuses de l'élastomère à fonctions COOH préparé selon le procédé de l'invention contribuent à rendre la composition obtenue utilisable pour constituer une bande de roulement de pneumatique présentant notamment une résistance au roulement réduite.

Par élastomère diénique, on entend de manière connue un élastomère (homopolymère ou copolymère) issu au moins en partie de monomères diènes (monomères porteurs de deux doubles liaisons carbone-carbone, conjuguées ou non).

On notera que certains élastomères diéniques, tels que les caoutchoucs butyle, les caoutchoucs nitrile ou les copolymères de diènes et d'alpha-oléfines de type EPDM, par exemple, ne sont pas utilisables dans les compositions selon l'invention, en raison de leur taux molaire réduit en unités issues de diènes (inférieur à 15 %) qui rend les compositions correspondantes inadaptées pour constituer des bandes de roulement de pneumatique.

A titre encore plus préférentiel, ledit élastomère diénique de la composition selon l'invention est un élastomère diénique "fortement insaturé", c'est-à-dire un élastomère diénique ayant un taux molaire d'unités issues de diènes conjugués qui est supérieur à 50 %.

A titre d'élastomère diénique susceptible d'être mis en oeuvre dans les compositions conformes à l'invention, on peut utiliser:

- un homopolymère obtenu par polymérisation d'un monomère diène conjugué ayant de 4 à 12 atomes de carbone, ou
- un copolymère obtenu par copolymérisation d'un ou plusieurs diènes conjugués entre eux ou avec un ou plusieurs

composés vinyle aromatique ayant de 8 à 20 atomes de carbone.

A titre de diènes conjugués conviennent notamment le butadiène-1,3, le 2-méthyl-1,3-butadiène, les 2,3-di (alkyle en C1 à C5) -1,3- butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, le méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99 % et 20 % en poids d'unités diéniques et entre 1% et 80% en poids d'unités vinyle-aromatiques.

De manière particulièrement préférentielle, l'élastomère diénique de la composition conforme à l'invention est choisi dans le groupe des élastomères diéniques fortement insaturés constitué par les polybutadiènes (BR), les polyisoprènes de synthèse (IR), les copolymères de butadiène-styrène (SBR), les copolymères de butadiène-isoprène (BIR), les copolymères d'isoprène-styrène (SIR), les copolymères de butadiène-styrène-isoprène (SBIR) ou un mélange de deux ou plus de ces composés. De manière encore plus préférentielle, l'élastomère diénique appartient à la famille constituée par les polybutadiènes, les copolymères de butadiène-styrène et les copolymères de butadiène-styrène-isoprène.

De préférence, l'élastomère diénique comportant des fonctions COOH le long de la chaîne obtenu par le procédé de l'invention présente une masse moléculaire supérieure à 100 000 g/mol.

Selon un exemple avantageux de réalisation de l'invention, l'élastomère diénique utilisé est un copolymère de butadiène-styrène préparé en émulsion, et il présente de préférence une quantité totale d'émulsifiant qui est inférieure à 3,5 pce (pce : parties en poids pour cent parties d'élastomère). On se reportera au document de brevet international WO-A-01/56812, dont le contenu est intégralement incorporé à la présente description par référence, pour une description détaillée d'une composition de caoutchouc incorporant un tel copolymère de butadiène/ styrène à taux réduit d'émulsifiant selon la présente invention, de son procédé de préparation et de la bande de roulement de pneumatique comportant cette composition.

A titre de comonomère précurseur utilisable pour obtenir l'élastomère diénique intermédiaire comportant des fonctions dérivées d'acide carboxylique le long de la chaîne, on utilise avantageusement, selon un premier mode de réalisation de l'invention, un dérivé d'acide carboxylique insaturé qui est hydrolysable pour former ledit acide.

Selon un exemple de réalisation de ce premier mode selon l'invention, ce dérivé d'acide carboxylique hydrolysable est un ester insaturé répondant à la formule $R_1$-C(O)O-$R_2$, où $R_1$ est un groupe hydrocarboné aliphatique ou alicyclique qui comporte au moins une double liaison ou bien un groupe hydrocarboné aromatique auquel est relié un substituant comportant au moins une double liaison, et où $R_2$ est un groupe alkyle.

De préférence, cet ester insaturé appartient au groupe constitué par les acrylates d'alkyle, les méthacrylates d'alkyle et les trans-phényl-3 propénoates d'alkyle.

A titre encore plus préférentiel, cet ester insaturé est un acrylate ou un méthacrylate de tert-butyle.

Selon un autre exemple de réalisation de ce premier mode selon l'invention, ce dérivé d'acide carboxylique hydrolysable est une amide insaturée répondant à la formule $R_3$-C(O)N-$R_4R_5$, où $R_3$ est un groupe hydrocarboné aliphatique ou alicyclique qui comporte au moins une double liaison ou bien un groupe hydrocarboné aromatique auquel est relié un substituant comportant au moins une double liaison, et où $R_4$ et $R_5$ sont des groupes alkyle qui sont chacun liés à l'atome d'azote.

De préférence, cette amide insaturée appartient au groupe constitué par l'acrylamide, la méthacrylamide, la N,N-diméthylacrylamide, la N,N-diméthylinéthacrylamide, la N-méthylcinnamide, la N-tertbutylcinnamide et la N,N-diméthylcinnamide.

Pour un exemple de mise en oeuvre de la copolymérisation en émulsion d'un monomère diène conjugué avec une amide insaturée, on pourra se référer aux documents de brevet chinois CN-A-1 208 736 ou CN-A-1 128 765, qui divulguent en particulier la copolymérisation du butadiène et du styrène avec l'acrylamide.

Selon un autre exemple de réalisation de ce premier mode selon l'invention, ce dérivé d'acide carboxylique hydrolysable est un nitrile insaturé répondant à la formule $R_6$-CN, où $R_6$ est un groupe hydrocarboné aliphatique ou alicyclique qui comporte au moins une double liaison, ou bien un groupe hydrocarboné aromatique auquel est relié un substituant comportant au moins une double liaison.

De préférence, ce nitrile insaturé appartient au groupe constitué par l'acrylonitrile, le méthacrylonitrile, le vinylacétonitrile et le phényl-3 propénitrile.

Pour un exemple de mise en oeuvre de la copolymérisation en émulsion d'un monomère diène conjugué avec un nitrile insaturé, on pourra se référer à nouveau au document de brevet chinois CN-A-1 128 765, qui divulgue en particulier la copolymérisation du butadiène et du styrène avec l'acrylonitrile.

Selon un autre exemple de réalisation de ce premier mode selon l'invention, ce dérivé d'acide carboxylique

hydrolysable est un anhydride d'acide dicarboxylique insaturé qui comporte au moins une double liaison.

De préférence, cet anhydride insaturé appartient au groupe constitué par l'anhydride maléique et l'anhydride citraconique.

Les fonctions précurseur d'acide carboxylique qui sont obtenues dans l'élastomère intermédiaire par copolymérisation avec le comonomère précurseur selon ce premier mode selon l'invention sont ensuite hydrolysées de manière connue pour l'obtention des fonctions COOH, par exemple par une réaction de saponification dans le cas d'un comonomère précurseur constitué d'un ester insaturé.

A titre de monomère précurseur, on peut également utiliser, selon un second mode de réalisation de l'invention, un composé oxydable en acide carboxylique qui appartient au groupe constitué par :

- les alcools insaturés répondant à la formule $R_7$-OH, où $R_7$ est un groupe hydrocarboné aliphatique ou alicyclique qui comporte au moins une double liaison, ou bien un groupe hydrocarboné aromatique auquel est relié un substituant comportant au moins une double liaison, et
- les aldéhydes insaturés répondant à la formule $R_8$-CHO, où $R_8$ est un groupe hydrocarboné aliphatique ou alicyclique qui comporte au moins une double liaison, ou bien un groupe hydrocarboné aromatique auquel est relié un substituant comportant au moins une double liaison.

Selon un exemple de réalisation de ce second mode selon l'invention, le comonomère précurseur est un alcool insaturé appartenant au groupe constitué par l'allyl alcool, le crotyl alcool, le méthallyl alcool et le cinnamyl alcool.

Selon un autre exemple de réalisation de ce second mode selon l'invention, le comonomère précurseur est un aldéhyde insaturé appartenant au groupe constitué par le crotonaldéhyde et le cinnamaldéhyde.

Les fonctions précurseur d'acide carboxylique qui sont obtenues dans l'élastomère intermédiaire par copolymérisation avec le comonomère précurseur selon ce second mode selon l'invention sont ensuite oxydées de manière connue pour l'obtention des fonctions COOH.

On pourra se référer au document de brevet européen EP-A-1 141 085 ou à l'article « catalytic oxydation of polyols by molecular oxygen in alkaline media, Kinet. Catal. (Transl. Of Kinet. Katal.), 1996, 37(3), pp. 368-376 », pour un exemple de mise en oeuvre de l'oxydation de fonctions alcool en fonction acide dans un polymère.

Une composition de caoutchouc selon l'invention telle que définie précédemment est obtenue par un procédé comprenant les étapes suivantes :

(i) on prépare en émulsion au moins un élastomère diénique comportant des fonctions acide carboxylique le long de la chaîne et ayant un taux molaire d'unités issues de diènes conjugués qui est supérieur à 30 %, en mettant en oeuvre :

- dans une solution émulsifiante, une copolymérisation par voie radicalaire d'au moins un monomère diène conjugué avec un comonomère précurseur qui est hydrolysable ou oxydable en acide carboxylique, pour obtenir un élastomère diénique intermédiaire comportant des fonctions précurseur dudit acide le long de sa chaîne, puis
- une hydrolyse ou une oxydation desdites fonctions précurseur pour obtenir ledit élastomère comportant des fonctions acide carboxylique le long de la chaîne ; et

(ii) on réalise ensuite :

- à une température maximale comprise entre 130 et 200° C, un premier temps de travail ou malaxage thermo-mécanique (parfois appelé phase « non-productive ») des constituants de ladite composition comprenant l'élastomère obtenu à l'étape (i), une charge inorganique renforçante et un agent de liaison charge inorganique renforçante/ élastomère diénique comprenant un alcoxysilane polysulfuré, à l'exception du système de réticulation, puis
- un second temps de travail ou malaxage mécanique (parfois appelé phase « productive ») à une température inférieure à 120° C (par exemple comprise entre 60 et 100° C), au cours duquel est incorporé le système de réticulation.

Concernant le premier temps de travail thermo-mécanique qui est compris dans l'étape (ii) de ce procédé de préparation selon l'invention, ce premier temps comprend de manière connue :

- une première étape dans laquelle sont mélangés entre eux lesdits constituants utilisés dans ledit premier temps, à l'exception de l'agent anti-oxydant, et
- une seconde étape dans laquelle l'agent anti-oxydant est incorporé et mélangé aux constituants de ladite première étape.

De plus, du monoxyde de zinc est usuellement ajouté lors de ce premier temps de travail thermo-mécanique pour activer la réticulation ultérieure.

La demanderesse a découvert d'une manière inattendue que l'incorporation de la totalité du monoxyde de zinc lors de la première étape de travail thermo-mécanique, cela contrairement à l'usage où on l'incorpore lors de la seconde étape de travail thermo-mécanique, permet de minimiser encore les pertes hystérétiques aux faibles déformations de la composition selon l'invention à l'état réticulé, tout en conférant à cette composition des propriétés de mise en oeuvre à l'état non réticulé qui sont toujours améliorées par rapport à celles de compositions à base d'élastomères fonctionnels connus et qui sont comparables à celles des compositions selon l'invention obtenues par incorporation du monoxyde de zinc lors de la seconde étape de travail thermo-mécanique.

La demanderesse a en outre découvert d'une manière inattendue que l'incorporation de monoxyde de magnésium lors de la première étape de travail thermo-mécanique permet de minimiser encore les pertes hystérétiques aux faibles et fortes déformations de la composition selon l'invention à l'état réticulé, tout en conférant à cette composition des propriétés de mise en oeuvre à l'état non réticulé qui sont analogues à celles de compositions à base d'élastomères non fonctionnels.

Bien entendu, les compositions de l'invention peuvent contenir un seul élastomère diénique à fonctions COOH tel que celui précité ou un mélange de plusieurs de ces élastomères.

Le ou les élastomères diéniques selon l'invention à fonctions COOH le long de la chaîne peuvent être utilisés seuls dans la composition conforme à l'invention, ou être utilisés en coupage avec tout autre élastomère conventionnellement utilisé dans les pneumatiques, tel que du caoutchouc naturel ou un coupage à base de caoutchouc naturel et un élastomère synthétique, ou encore un autre élastomère diénique éventuellement couplé et/ou étoilé ou encore partiellement ou entièrement fonctionnalisé autrement qu'avec des fonctions COOH le long de la chaîne.

On notera que l'amélioration des propriétés de la composition de caoutchouc selon l'invention sera d'autant plus élevée, que la proportion dudit ou desdits élastomères conventionnels dans la composition selon l'invention sera plus réduite. Cet ou ces élastomères conventionnels pourront le cas échéant être présents dans la composition selon l'invention selon une quantité allant de 0 à 70 parties en poids pour 100 parties en poids d'élastomère(s) diénique(s) selon l'invention à fonctions COOH le long de la chaîne.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est présente dans la composition de l'invention selon une quantité égale ou supérieure à 40 pce (pce: parties en poids pour cent parties d'élastomère(s) diénique(s)).

Egalement à titre préférentiel, cette charge inorganique renforçante est présente à titre majoritaire dans la charge renforçante de la composition de l'invention, de telle manière que sa fraction massique dans ladite charge renforçante soit supérieure à 50 %.

Avantageusement, ladite charge inorganique renforçante est, en totalité ou tout du moins majoritairement, de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, même si les silices précipitées hautement dispersibles sont préférées.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088 précitée.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

On notera que la charge renforçante d'une composition de caoutchouc selon l'invention peut contenir en coupage (mélange), en plus de la ou des charges inorganiques renforçantes précitées, du noir de carbone à titre minoritaire

(c'est-à-dire selon une fraction massique inférieure à 50 %). Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N 134, N234, N339, N347, N375.

Par exemple, les coupages noir/ silice ou les noirs partiellement ou intégralement recouverts de silice conviennent pour constituer la charge renforçante. Conviennent également des charges inorganiques renforçantes comprenant les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

A titre de charge inorganique renforçante, on peut également utiliser, à titre non limitatif,

- des alumines (de formule $Al_2O_3$), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

Dans le cas où la charge renforçante ne contient qu'une charge inorganique renforçante et du noir de carbone, la fraction massique de ce noir de carbone dans ladite charge renforçante est préférentiellement choisie inférieure ou égale à 30 %.

Cependant, l'expérience montre que les propriétés précitées de la composition selon l'invention sont d'autant plus améliorées, que la charge renforçante qu'elle comprend contient une fraction massique plus élevée en charge inorganique renforçante, et que lesdites propriétés sont optimales lorsque ladite composition contient uniquement une charge inorganique renforçante, par exemple de la silice, à titre de charge renforçante. Ce dernier cas constitue donc un exemple préférentiel de composition de caoutchouc selon l'invention.

La composition de caoutchouc selon l'invention comprend en outre de manière classique, un agent de liaison charge inorganique renforçante / matrice élastomère (encore appelé agent de couplage), qui a pour fonction d'assurer une liaison (ou couplage) suffisante, de nature chimique et/ou physique, entre ladite charge inorganique et la matrice, tout en facilitant la dispersion de cette charge inorganique au sein de ladite matrice.

Par agent de couplage, on entend plus précisément un agent apte à établir une connexion suffisante, de nature chimique et/ou physique, entre la charge considérée et l'élastomère, tout en facilitant la dispersion de cette charge au sein de la matrice élastomère. Un tel agent de couplage, au moins bifonctionnel, a par exemple comme formule générale simplifiée " Y-T-X ", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

Les agent de couplage utilisables dans la composition selon la présente invention sont des alkoxysilanes polysulfurés, dits "symétriques" ou "asymétriques" selon leur structure particulière, tels que décrits par exemple dans les brevets US-A-3 842 111, US-A-3 873 489; US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:

$$(I) \qquad Z - A - S_n - A - Z \quad ,$$

dans laquelle:

- n est un entier de 2 à 8 (de préférence de 2 à 5);
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$ en particulier le propylène);
- Z répond à l'une des formules ci-après:

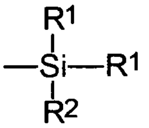 ; 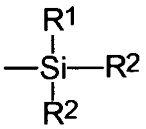 ; 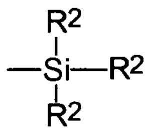 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence des groupes alkoxyle en $C_1$-$C_8$ ou cycloalkoxyle en $C_5$-$C_8$, plus préférentiellement des groupes alkoxyle en $C_1$-$C_4$, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, on comprendra que la valeur moyenne des "n" est un nombre fractionnaire, de préférence compris entre 2 et 5.

Comme alkoxysilanes polysulfurés, on citera plus particulièrement les polysulfures (notamment les disulfures, trisulfures ou tétrasulfures) de bis-(alkoxyl($C_1$-$C_4$)-alkyl($C_1$-$C_4$)silylalkyl($C_1$-$C_4$)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule $[(C_2H_5O)_3Si(CH_2)_3S_2]_2$ ou le disulfure de bis(triéthoxysilylpropyle), en abrégé TESPD, de formule $[(C_2H_5O)_3Si(CH_2)_3S]_2$. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4). On citera également les monoalcoxysilanes tétrasulfurés, tels que le tétrasulfure de monoéthoxydiméthylsilylpropyle (en abrégé MESPT), qui font l'objet de la demande de brevet international PCT/EP02/03774 au nom des demanderesses.

Les compositions conformes à l'invention comprennent également, outre le ou les élastomères diéniques à fonctions acide carboxylique le long de la chaîne et ladite charge inorganique renforçante, ledit agent de liaison, des plastifiants, des pigments, des anti-oxydants, des cires anti-ozonantes, un système de réticulation à base soit de soufre et/ou de peroxyde et/ou de bismaléimides, des activateurs de réticulation comprenant du monoxyde de zinc et de l'acide stéarique, des huiles d'extension, un ou plusieurs agents de recouvrement de la silice tels que des alcoxysilanes, des polyols, ou des amines.

En particulier, ces compositions peuvent être telles que l'élastomère diénique à fonctions acide carboxylique est étendu à une huile paraffinique, aromatique ou naphténique, avec une quantité d'huile d'extension comprise entre 0 et 50 pce.

L'invention a également pour objet une bande de roulement de pneumatique qui est telle qu'elle comprend une composition de caoutchouc réticulable ou réticulée telle que celle susmentionnée, ou bien qui est telle qu'elle est constituée de cette composition.

En raison de l'hystérèse réduite qui caractérise une composition de caoutchouc selon l'invention à l'état réticulé, on notera qu'un pneumatique dont la bande de roulement comprend ladite composition présente une résistance au roulement avantageusement réduite.

Une enveloppe de pneumatique selon l'invention comporte cette bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

Les techniques expérimentales suivantes ont notamment été utilisées pour la caractérisation des polymères obtenus.

a) On a utilisé la technique SEC (chromatographie d'exclusion par la taille) pour déterminer les distributions de masses moléculaires relatives à des échantillons de ces polymères. A partir de produits étalons dont les caractéristiques sont décrites dans l'exemple 1 du document de brevet européen EP-A-692 493, cette technique a permis d'évaluer pour un échantillon une masse moléculaire en nombre qui a une valeur relative, à la différence de celle déterminée par

osmométrie, ainsi qu'une masse moléculaire moyenne en poids (Mw). On en a déduit l'indice de polydispersité (Ip=Mw/Mn) de cet échantillon. Selon cette technique, on sépare physiquement les macromolécules suivant leurs tailles respectives à l'état gonflé, dans des colonnes remplies d'une phase stationnaire poreuse. Avant de mettre en oeuvre cette séparation, on solubilise l'échantillon de polymère à une concentration d'environ 1 g/l dans du tétrahydrofurane.

On utilise pour la séparation précitée un chromatographe commercialisé sous la dénomination « WATERS » et sous le modèle « 150C ». Le solvant d'élution est le tétrahydrofurane, le débit est de 1 ml/min, la température du système est de 35° C et la durée d'analyse est de 30 min. On utilise un jeu de deux colonnes « WATERS » dont le type est « STYRAGEL HT6E ». Le volume injecté de la solution d'échantillon de polymère est de 100 µl. Le détecteur est un réfractomètre différentiel « WATERS » dont le modèle est « R401 ». On utilise également un logiciel d'exploitation des données chromatographiques, dont la dénomination commerciale est « WATERS MILLENIUM ».

b) Dans le but de calculer le taux de fonctions COOH (en méq/kg de polymère) et le nombre de motifs fonctionnels correspondants par chaîne de polymère, on a utilisé une méthode de dosage selon la technique RMN $^1H$, après estérification avec un excès de diazométhane, réactif connu pour réagir avec les fonctions COOH.

Plus précisément, cette méthode consiste à obtenir, à l'aide du diazométhane, des fonctions ester méthylique à partir des fonctions COOH qui ont été fixées sur l'élastomère, en vue d'accéder indirectement et de manière quantitative aux taux de fonctions COOH par RMN $^1H$.

(i) On prépare au préalable le diazométhane de la façon suivante.

On l'obtient par action de la potasse alcoolique sur le N-méthyl-N-nitroso-paratoluène sulfonamide, en présence de diéthyl éther et à la température de la glace fondante. On récupère ensuite la phase éthérée contenant le réactif par une simple distillation.

On met ensuite en oeuvre la réaction d'estérification de la manière suivante.

(ii) On solubilise dans du toluène un échantillon de l'élastomère ayant été lavé et séché d'une manière spécifique, de sorte à pouvoir le caractériser analytiquement.

(iii) Cette préparation spécifique consiste à traiter l'élastomère par trois mises en solution successives dans du toluène, respectivement suivies de coagulations dans un mélange qui est constitué d'acétone et d'eau et qui est acidifié à pH=2 avec de l'acide chlorhydrique, cela afin d'éliminer toutes traces éventuelles de composés acides (stoppeur, anti-oxydant, résidus catalytiques, sous-produits tels que l'acide isovalérique, notamment). On sèche ensuite l'élastomère ainsi traité dans une étuve à 50° C, sous vide et sous atmosphère d'azote.

(iv) On y ajoute ensuite la solution éthérée contenant le diazométhane, de telle manière qu'il y ait un excès de réactif par rapport aux fonctions COOH. On fait par la suite coaguler dans du méthanol le polymère ainsi traité, puis on le remet par deux fois en solution dans le toluène et dans le méthanol pour sa coagulation. On sèche ensuite le polymère dans un dessicateur, à température ambiante et sous vide poussé, au moyen d'une pompe à palettes.

(v) On procède ensuite à une analyse RMN $^1H$ de la manière suivante.

On solubilise dans du sulfure de carbone un échantillon du polymère ainsi estérifié. On utilise pour l'analyse du signal RMN $^1H$ un spectromètre commercialisé sous la dénomination BRUKER AC200. Le signal caractéristique des trois protons méthyliques de $COOCH_3$ permet d'accéder quantitativement au taux initial de fonctions COOH du polymère fonctionnel.

Dans les exemples suivants, les propriétés des compositions ont été évaluées comme suit :

- Viscosité Mooney : ML(1+4) à 100° C mesurée selon la norme ASTM D 1646 de 1999.
- Modules d'allongement MA100 (à 100 %) mesuré selon la norme ASTM D 412.
- Indice de cassage Scott : force à la rupture (FR en MPa) et allongement à la rupture (AR en %) mesurés à 23° C selon la norme ASTM D 412 de 1998.
- Dureté Shore A : mesurée selon la norme ASTM D 2240 de 1997.
- Pertes hystérétiques (PH) : mesurées en % par rebond à 60° C au sixième choc, selon la relation : PH (%) = 100 x $(W_0-W_1)/W_1$ , avec $W_0$ : énergie fournie et $W_1$ : énergie restituée.
- Propriétés dynamiques en cisaillement : mesurées selon la norme ASTM D 2231-71, approuvée à nouveau en 1977 (mesure en fonction de la déformation effectuée à 10 Hz avec une déformation crête-crête de 0,15 % à 50 %). L'hystérèse est exprimée par la mesure de tan δ max. à 23° C selon la norme ASTM D 2231-71.

**I/ <u>Synthèse d'un SBR A « témoin » préparé en émulsion :</u>**

1) Synthèse du latex :

Dans un réacteur de 10 L à 25° C sous agitation mécanique et atmosphère inerte, on introduit 3712 g d'eau déionisée et dégazée. On introduit ensuite une solution aqueuse de 600 mL où l'on a dissous 56,4 g de « SDS »

(dodécylsulfate de sodium). Puis on introduit une solution de 100 mL de styrène où l'on a dissous 3,6 mL de n-dodécylmercaptan. On introduit ensuite 792 mL de styrène, puis on refroidit à 12° C. On injecte alors 1504 mL de butadiène, puis immédiatement après, le catalyseur redox d'initiation (8,385 g de pyrophosphate de sodium décahydraté et 5,226 g de sulfate de fer heptahydraté mis au préalable à réagir ensemble dans 200 mL d'eau à 60° C pendant 45 minutes). Enfin on injecte le générateur de radicaux (3,925 g d'hydroxyde de paramenthane à 80 %, dissous dans 100 mL de styrène). On stabilise la température à 5° C, et on stoppe la réaction à 60 % de conversion par injection de 6,8 g d'hydroquinone dissous dans 200 mL d'eau. On récupère le latex, puis on le traite en y ajoutant 1 % en poids par rapport à l'élastomère d'un mélange anti-oxydant de dénomination « A02246/S 13 » (80 %/20 %).

2) <u>Traitement du latex :</u>

On prend 360 g du latex synthétisé ci-dessus, mis sous forte agitation mécanique. On ajoute 46 mL d'une solution de chlorure de sodium à 200 g/L et 810 mL de toluène. Lorsque le mélange est homogène, on procède à quatre lavages successifs (1 L d'eau pour 1 L de latex gonflé, et 5 mL d'HCl aqueux à 35 % par litre de mélange eau-latex gonflé).

Enfin, on soumet à un stripping le latex gonflé en milieu acidifié, et on récupère le SBR. On le repasse en solution, et on l'étend alors à 38 pce d'huile aromatique. On soumet à nouveau ce SBR à un stripping, et l'on obtient un SBR étendu à l'huile de viscosité Mooney ML(1+4)=53, de Tg = -33° C, de Mn = 113 000 g/mol, d'indice Ip = 4,47, de taux de gel < 0,3%, de taux de styrène égal à 39,9 %, de taux d'unités 1,2 égal à 14,2 % et de taux d'unités trans-1,4 égal à 75 %.

**II/ <u>Synthèse d'un SBR B préparé en émulsion comportant des motifs ester (méthacrylate de tert-butyle) le long de la chaîne à partir du SBR A:</u>**

On reprend le mode opératoire précédent, en incorporant à la fin de l'introduction du butadiène 13 mL de méthacrylate de tert-butyle fraîchement distillé.

On obtient un élastomère étendu à 37,5 pce d'huile aromatique qui comporte 37 méq/kg de fonctions méthacrylate de terbutyle, de viscosité Mooney ML(1+4) = 53,2, de Tg =-31°C, de Mn = 102 000 g/mol, d'indice Ip = 4,57, de taux de gel < 0,3 %, de taux de styrène égal à 40 %, de taux d'unités 1,2 égal à 14,2 % et de taux d'unités trans-1,4 égal à 74,4 %.

**III/ <u>Obtention d'un SBR C selon l'invention comportant des fonctions COOH le long de la chaîne par hydrolyse des fonctions méthacrylate de tert-butyle du SBR B :</u>**

Afin de générer des fonctions acide, on procède comme suit à partir du SBR B non étendu de la synthèse précédente :

On remet en solution 50 g du SBR B contenant 25 méq/kg des fonctions ester citées ci-dessus dans 600 mL de toluène. On ajoute 9 mL d'acide paratoluène sulfonique à 2,5 mol/L dans le THF (tétrahydrofurane), et on laisse réagir 8 h sous agitation à 80° C. A la fin de la réaction, on rajoute 37,5 pce d'huile aromatique, on ré-acidifié en ajoutant 2mL d'HCl aqueux à 37 %, puis on procède à un stripping en milieu acide (pH = 1,5).

On récupère un élastomère à 37 méq/kg de fonctions COOH, de viscosité ML(1+4) = 65, de Tg = -31° C, de Mn = 124 000 g/mol, d'indice Ip = 4,37, de taux de gel < 0,3 %, de taux de styrène égal à 39,8 %, de taux d'unités 1,2 égal à 14 % et de taux d'unités trans-1,4 égal à 74 %.

**IV/ <u>Compositions de caoutchouc respectivement à base de SBR A, SBR B et SBR C :</u>**

On a préparé trois compositions A, B et C de type bande de roulement pour enveloppe de pneumatique « tourisme » comprenant chacune de la silice à titre de charge renforçante. Ces compositions sont respectivement à base des élastomères précités SBR A, SBR B et SBR B qui ont été étendus à l'huile aromatique.

La formulation de chacune de ces compositions est la suivante (exprimée en pce : parties en poids pour cent parties d'élastomère) :

| | |
|---|---|
| Elastomère étendu | = 137,5 |
| Silice (1) | = 80 |
| Agent de liaison (2) | = 6,4 |
| ZnO | = 2,5 |
| Acide stéarique | = 2 |
| Antioxydant (3) | = 1,9 |

(suite)

| | |
|---|---|
| Cire ozone « C32ST » | = 1,5 |
| Soufre | = 1,1 |
| Sulfénamide (4) | = 2 |
| Diphénylguanidine | = 1,5 |

Avec :

(1) = Silice « ZEOSIL 1165 » commercialisée par la société Rhodia
(2) = Agent de liaison « Si69 » commercialisé par la société Dégussa
(3) = N-(1,3-dimétyl-butyl)-N'-phényl-p-phénylènediamine
(4) = N-cyclohexyl-2-benzothiazylsulfénamide.

Chacune des compositions A, B et C est réalisée, dans un premier temps de travail thermo-mécanique, par deux étapes séparées par une phase de refroidissement, puis, dans un second temps de finition, par un travail mécanique.
On introduit successivement, dans un mélangeur interne de laboratoire de type "Banbury", dont la capacité est de 400 $cm^3$, qui est rempli à 70 % et dont la température initiale est d'environ 90° C, l'élastomère, les deux tiers de la charge renforçante, l'agent de couplage, la diphénylguanidine et l'acide stéarique, puis, environ une minute plus tard, le reste de la charge renforçante, l'huile aromatique et la cire anti-ozone « C32ST ».
On conduit la première étape de travail thermo-mécanique pendant 5 minutes, jusqu'à une température maximale de tombée de 160° C environ. Le bloc élastomère est alors récupéré et refroidi.
Puis on conduit une seconde étape de travail thermo-mécanique dans le même mélangeur pendant une durée de 4 minutes avec ajout de l'anti-oxydant, jusqu'à une température maximale de tombée de 160° C environ.
Le premier temps précité de travail thermo-mécanique est ainsi réalisé, étant précisé que la vitesse moyenne des palettes lors de ce premier temps est de 85 t/min.
On récupère le mélange ainsi obtenu, on le refroidit puis, dans un mélangeur externe (homo-finisseur), on ajoute le soufre et la sulfénamide à 30° C, en mélangeant encore le tout pendant une durée de 3 à 4 minutes (travail mécanique).
Les compositions ainsi obtenues sont ensuite calandrées, soit sous la forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.
La réticulation est effectuée à 150° C pendant 40 min.
On notera que l'introduction de la totalité du monoxyde de zinc (ZnO) est réalisée à 120°C lors de la première étape de travail thermo-mécanique, pour l'obtention des compositions B et C réticulables.
Les résultats sont consignés dans le tableau ci-après.

<u>**TABLEAU ;**</u>

| COMPOSITION | A | B | C |
|---|---|---|---|
| Elastomère | SBR A | SBR B | SBR C |
| ML(1+4) à 100° C (gomme) | 53 | 53 | 65 |
| <u>Propriétés à l'état non vulcanisé</u> | | | |
| ML(1+4) à 100° C (« Mooney mélange ») | 84 | 80 | 90 |
| <u>Propriétés à l'état vulcanisé</u> | | | |
| Shore A | 66,4 | 66,9 | 63,7 |
| MA10 (MPa) | 5,94 | 6,36 | 4,82 |
| MA100 (MPa) | 1,68 | 1,67 | 1,83 |
| MA300 (MPa) | 2,02 | 1,98 | 2,59 |
| MA300/MA100 | 1,20 | 1,18 | 1,42 |
| indice de cassage Scott 23° C | | | |
| Fr (MPa) | 26,3 | 26,3 | 28,3 |
| Ar (%) | 610 | 610 | 580 |

(suite)

| | | | |
|---|---|---|---|
| Propriétés à l'état vulcanisé | | | |
| Pertes 60° C | 30,9 | 32,2 | 29,1 |
| Propriétés dynamiques en fonction de la déformation | | | |
| $\Delta$G*23°C (MPa) | 4,29 | 4,96 | 1,31 |
| tan($\delta$)$_{max}$ 23° C | 0,364 | 0,380 | 0,242 |

Concernant les propriétés à l'état réticulé, on notera, d'une part, que le rapport MA300/MA100 de la composition C à base du SBR C à fonctions COOH le long de la chaîne est supérieur à celui des compositions A et B respectivement à base du SBR A non fonctionnel et du SBR à fonctions ester le long de la chaîne, et, d'autre part, que les propriétés hystérétiques à faibles et fortes déformations (tan($\delta$)$_{max}$ à 23° C et pertes à 60° C, respectivement) de ladite composition C sont fortement améliorées par rapport à celles desdites compositions A et B.

On notera également que la composition C selon l'invention présente une valeur de Mooney « mélange » proche de celle desdites composition A et B.

En d'autres termes, la composition C, à base du SBR C, de silice et caractérisée par l'introduction de la totalité du ZnO à 120° C lors de la première étape de mélangeage du premier temps de travail thermo-mécanique, présente des propriétés de caoutchouterie à l'état réticulé (notamment des propriétés hystérétiques à faibles déformations) qui sont nettement améliorées par rapport à celles des compositions A et B, et une aptitude à la mise en oeuvre équivalente à celle de la composition A à base de silice et du SBR A non fonctionnel.

## Revendications

1. Composition de caoutchouc réticulable ou réticulée utilisable pour constituer une bande de roulement de pneumatique, ladite composition étant à base d'au moins :

    - une charge inorganique renforçante,
    - un système de réticulation à base de soufre et/ou peroxyde et/ ou de bismaléimides,
    - un élastomère diénique ayant un taux molaire d'unités issues de diènes conjugués supérieur à 30 % qui est préparé en émulsion et qui comporte des fonctions acide carboxylique le long de sa chaîne, présent à titre exclusif ou utilisé en coupage avec un autre élastomère conventionnel présent selon une quantité allant de 0 à 70 parties en poids pour 100 parties en poids de l'élastomère diénique à fonctions acide carboxylique le long de la chaîne, cet autre élastomère conventionnel étant choisi parmi le caoutchouc naturel, un coupage à base de caoutchouc naturel et d'un élastomère synthétique, et un autre élastomère diénique éventuellement couplé et/ou étoilé ou encore partiellement ou entièrement fonctionnalisé autrement qu'avec des fonctions COOH le long de la chaîne et
    - un agent de liaison entre ladite charge inorganique renforçante et ledit élastomère qui comprend un alcoxysilane polysulfuré,

    ledit élastomère étant susceptible d'être obtenu en réalisant :

    (a) dans une solution émulsifiante, une copolymérisation par voie radicalaire d'au moins un monomère diène conjugué avec un comonomère précurseur qui est hydrolysable ou oxydable en acide carboxylique, pour obtenir un élastomère diénique intermédiaire comportant des fonctions précurseur dudit acide le long de sa chaîne, puis
    (b) une hydrolyse ou une oxydation desdites fonctions précurseur pour obtenir ledit élastomère comportant des fonctions acide carboxylique le long de la chaîne.

2. Composition de caoutchouc selon la revendication 1, **caractérisée en ce que** l'élastomère diénique est choisi dans le groupe constitué par les homopolymères obtenus par polymérisation d'un monomère diène conjugué ayant de 4 à 12 atomes de carbone, ou les copolymères obtenus par copolymérisation d'un ou plusieurs diènes conjugués entre eux ou avec un ou plusieurs composés vinyle aromatique ayant de 8 à 20 atomes de carbone, et les mélanges de deux ou plus de ces polymères.

3. Composition de caoutchouc selon la revendication 1 ou 2, **caractérisée en ce que** ledit comonomère précurseur est un dérivé d'acide carboxylique insaturé qui est hydrolysable pour former ledit acide.

4. Composition de caoutchouc selon la revendication 3, **caractérisée en ce que** ledit comonomère précurseur est un ester insaturé répondant à la formule $R_1$-C(O)O-$R_2$, où $R_1$ est un groupe hydrocarboné aliphatique ou alicyclique qui comporte au moins une double liaison ou bien un groupe hydrocarboné aromatique auquel est relié un substituant comportant au moins une double liaison, et où $R_2$ est un groupe alkyle.

5. Composition de caoutchouc selon la revendication 4, **caractérisée en ce que** ledit comonomère précurseur appartient au groupe constitué par les acrylates d'alkyle, les méthacrylates d'alkyle et les trans-phényl-3 propénoates d'alkyle.

6. Composition de caoutchouc selon la revendication 5, **caractérisée en ce que** ledit comonomère précurseur est un acrylate ou un méthacrylate de tert-butyle.

7. Composition de caoutchouc selon la revendication 3, **caractérisée en ce que** ledit comonomère précurseur est une amide insaturée répondant à la formule $R_3$-C(O)N-$R_4R_5$, où $R_3$ est un groupe hydrocarboné aliphatique ou alicyclique qui comporte au moins une double liaison ou bien un groupe hydrocarboné aromatique auquel est relié un substituant comportant au moins une double liaison, et où $R_4$ et $R_5$ sont des groupes alkyle qui sont chacun liés à l'atome d'azote.

8. Composition de caoutchouc selon la revendication 7, **caractérisée en ce que** ledit comonomère précurseur appartient au groupe constitué par l'acrylamide, la méthacrylamide, la N,N-diméthylacrylamide, la N,N-diméthylméthacrylamide, la N-méthylcinnamide, la N-tertbutylcinnamide et la N,N-diméthylcinnamide.

9. Composition de caoutchouc selon la revendication 3, **caractérisée en ce que** ledit comonomère précurseur est un nitrile insaturé répondant à la formule $R_6$-CN, où $R_6$ est un groupe hydrocarboné aliphatique ou alicyclique qui comporte au moins une double liaison, ou bien un groupe hydrocarboné aromatique auquel est relié un substituant comportant au moins une double liaison.

10. Composition de caoutchouc selon la revendication 9, **caractérisée en ce que** ledit comonomère précurseur appartient au groupe constitué par l'acrylonitrile, le méthacrylonitrile, le vinylacétonitrile et le phényl-3 propénitrile.

11. Composition de caoutchouc selon la revendication 3, **caractérisée en ce que** ledit comonomère précurseur est un anhydride d'acide dicarboxylique insaturé qui comporte au moins une double liaison.

12. Composition de caoutchouc selon la revendication 11, **caractérisée en ce que** ledit comonomère précurseur appartient au groupe constitué par l'anhydride maléique et l'anhydride citraconique.

13. Composition de caoutchouc selon la revendication 1 ou 2, **caractérisée en ce que** ledit comonomère précurseur est oxydable en acide carboxylique et appartient au groupe constitué par:

   - les alcools insaturés répondant à la formule $R_7$-OH, où $R_7$ est un groupe hydrocarboné aliphatique ou alicyclique qui comporte au moins une double liaison, ou bien un groupe hydrocarboné aromatique auquel est relié un substituant comportant au moins une double liaison, et
   - les aldéhydes insaturés répondant à la formule $R_8$-CHO, où $R_8$ est un groupe hydrocarboné aliphatique ou alicyclique qui comporte au moins une double liaison, ou bien un groupe hydrocarboné aromatique auquel est relié un substituant comportant au moins une double liaison.

14. Composition de caoutchouc selon la revendication 13, **caractérisée en ce que** ledit comonomère précurseur est un alcool insaturé appartenant au groupe constitué par l'allyl alcool, le crotyl alcool, le méthallyl alcool et le cinnamyl alcool.

15. Composition de caoutchouc selon la revendication 13, **caractérisée en ce que** ledit comonomère précurseur est un aldéhyde insaturé appartenant au groupe constitué par le crotonaldéhyde et le cinnamaldéhyde.

16. Composition de caoutchouc selon une des revendications précédentes, **caractérisée en ce que** ledit élastomère diénique comporte un taux molaire d'unités issues de diènes conjugués qui est supérieur à 50 %.

17. Composition de caoutchouc selon la revendication 16, **caractérisée en ce que** ledit élastomère diénique appartient à la famille constituée par les polybutadiènes, les copolymères butadiène/ styrène et les copolymères butadiène/

styrène/ isoprène.

**18.** Composition de caoutchouc selon une des revendications précédentes, **caractérisée en ce que** ledit élastomère diénique à fonctions acide carboxylique le long de la chaîne comprend une quantité totale d'émulsifiant qui est inférieure à 3,5 pce (pce : parties en poids pour cent parties d'élastomère).

**19.** Composition de caoutchouc selon une des revendications précédentes, **caractérisée en ce que** ledit élastomère diénique comportant des fonctions acide carboxylique le long de la chaîne est étendu à une huile paraffinique, aromatique ou naphténique avec une quantité d'huile d'extension comprise entre 0 et 50 pce.

**20.** Composition de caoutchouc selon une des revendications précédentes, **caractérisée en ce que** ledit élastomère diénique comportant des fonctions acide carboxylique le long de la chaîne présente une masse moléculaire supérieure à 100 000 g/mol.

**21.** Composition de caoutchouc selon une des revendications précédentes, **caractérisée en ce que** ladite charge inorganique renforçante est présente dans ladite composition de caoutchouc selon une quantité égale ou supérieure à 40 pce (pce: parties en poids pour cent parties d'élastomère(s) diénique(s)).

**22.** Composition de caoutchouc selon une des revendications précédentes, **caractérisée en ce qu'**elle comporte une charge renforçante comprenant à titre majoritaire ou exclusif ladite charge inorganique renforçante, de telle manière que la fraction massique de ladite charge inorganique renforçante dans ladite charge renforçante soit supérieure à 50 % et inférieure ou égale à 100 %.

**23.** Composition de caoutchouc selon une des revendications 1 à 22, **caractérisée en ce que** ladite charge inorganique renforçante comprend en partie ou en totalité de la silice.

**24.** Composition de caoutchouc selon une des revendications 1 à 22, **caractérisée en ce que** ladite charge inorganique renforçante comprend en partie ou en totalité de l'alumine.

**25.** Composition de caoutchouc selon une des revendications 1 à 22, **caractérisée en ce que** ladite charge inorganique renforçante comprend en partie ou en totalité du noir de carbone modifié en surface par de la silice.

**26.** Procédé de préparation d'une composition de caoutchouc réticulable ou réticulée selon une des revendications précédentes, **caractérisé en ce qu'**il comprend les étapes suivantes :

(i) on prépare en émulsion au moins un élastomère diénique comportant des fonctions acide carboxylique le long de la chaîne et ayant un taux molaire d'unités issues de diènes conjugués qui est supérieur à 30 %, en mettant en oeuvre :

- dans une solution émulsifiante, une copolymérisation par voie radicalaire d'au moins un monomère diène conjugué avec un comonomère précurseur qui est hydrolysable ou oxydable en acide carboxylique, pour obtenir un élastomère diénique intermédiaire comportant des fonctions précurseur dudit acide le long de sa chaîne, puis
- une hydrolyse ou une oxydation desdites fonctions précurseur pour obtenir ledit élastomère comportant des fonctions acide carboxylique le long de la chaîne ; et

(ii) on réalise ensuite :

- à une température maximale comprise entre 130 et 200° C, un premier temps de travail thermo-mécanique des constituants de ladite composition comprenant l'élastomère obtenu à l'étape (i) à titre majoritaire ou exclusif, une charge inorganique renforçante et un agent de liaison charge inorganique renforçante/ élastomère diénique comprenant un alcoxysilane polysulfuré, à l'exception du système de réticulation qui est à base de soufre et/ou de peroxyde et/ou de bismaléimides, puis
- un second temps de travail mécanique à une température inférieure à 120° C, au cours duquel est incorporé ledit système de réticulation à base de soufre et/ou de peroxyde et/ou de bismaléimides.

**27.** Procédé de préparation d'une composition de caoutchouc selon la revendication 26, ledit premier temps de travail thermo-mécanique comprenant:

- une première étape dans laquelle sont mélangés entre eux lesdits constituants utilisés dans ledit premier temps, à l'exception de l'agent anti-oxydant, et
- une seconde étape dans laquelle l'agent anti-oxydant est incorporé et mélangé aux constituants de ladite première étape,

du monoxyde de zinc étant ajouté lors dudit premier temps pour activer la réticulation ultérieure, **caractérisé en ce que** l'on incorpore la totalité dudit monoxyde de zinc lors de ladite première étape dudit premier temps de travail thermo-mécanique.

**28.** Procédé de préparation d'une composition de caoutchouc selon la revendication 26 ou 27, ledit premier temps de travail thermo-mécanique comprenant:

- une première étape dans laquelle sont mélangés entre eux lesdits constituants utilisés dans ledit premier temps, à l'exception de l'agent anti-oxydant et
- une seconde étape dans laquelle l'agent anti-oxydant est incorporé et mélangé aux constituants de ladite première étape,

du monoxyde de zinc étant ajouté lors dudit premier temps pour activer la réticulation ultérieure, **caractérisé en ce qu'**il consiste à incorporer du monoxyde de magnésium lors de ladite première étape dudit premier temps de travail thermo-mécanique.

**29.** Bande de roulement de pneumatique, **caractérisée en ce qu'**elle comprend une composition de caoutchouc réticulable ou réticulée selon une des revendications 1 à 25.

**30.** Bande de roulement de pneumatique selon la revendication 29, **caractérisée en ce qu'**elle est constituée de ladite composition de caoutchouc réticulable ou réticulée.

**31.** Enveloppe de pneumatique présentant une résistance au roulement réduite, **caractérisée en ce qu'**elle comporte une bande de roulement selon la revendication 29 ou 30.

## Claims

**1.** A cross-linkable or cross-linked rubber composition which is usable for constituting a tyre tread, said composition being based on at least:

- a reinforcing inorganic filler,
- a cross-linking system based either on sulphur and/or on peroxide and/or on bismaleimides,
- a diene elastomer having a molar ratio of units originating from conjugated dienes which is greater than 30% which is prepared in emulsion and comprises carboxylic acid functions along its chain, used on its own or used in a blend with any other elastomer conventionally used in tyres in a quantity of from 0 to 70 parts by weight per 100 parts by weight of the diene elastomer having carboxylic acid functions along the chain, said other conventionally used elastomer being chosen from natural rubber or a blend based on natural rubber and a synthetic elastomer, or alternatively another diene elastomer which may possibly be coupled and/or starred or alternatively partially or entirely functionalised other than with carboxylic acid functions along the chain and
- a bonding agent between said reinforcing inorganic filler and said elastomer which comprises a polysulphurised alkoxysilane,

**characterised in that** said elastomer is capable of being obtained by effecting:

(a) in an emulsifying solution, radical copolymerisation of at least one conjugated diene monomer with a precursor comonomer which is hydrolysable or oxidisable to carboxylic acid, in order to obtain an intermediate diene elastomer comprising precursor functions of said acid along its chain, then
(b) hydrolysis or oxidation of said precursor functions in order to obtain said elastomer comprising carboxylic acid functions along the chain.

**2.** A rubber composition according to Claim 1, **characterised in that** diene elastomer is chosen from the group consisting of homopolymers obtained by polymerisation of a conjugated diene monomer having 4 to 12 carbon atoms,

copolymers obtained by copolymerisation of one or more dienes conjugated together or with one or more vinyl-aromatic compounds having 8 to 20 carbon atoms, and mixtures of two or more of these polymers.

**3.** A rubber composition according to Claim 1 or 2, **characterised in that** said precursor comonomer is an unsaturated carboxylic acid derivative which is hydrolysable to form said acid.

**4.** A rubber composition according to Claim 3, **characterised in that** said precursor comonomer is an unsaturated ester of the formula $R_1$-C(O)O-$R_2$, where $R_1$ is an aliphatic or alicyclic hydrocarbon group which comprises at least one double bond or alternatively an aromatic hydrocarbon group to which is linked a substituent comprising at least one double bond, and where $R_2$ is an alkyl group.

**5.** A rubber composition according to Claim 4, **characterised in that** said precursor comonomer belongs to the group constituted by alkyl acrylates, alkyl methacrylates and alkyl trans-3-phenyl propenoates.

**6.** A rubber composition according to Claim 3, **characterised in that** said precursor comonomer is a tert. butyl acrylate or methacrylate.

**7.** A rubber composition according to Claim 3, **characterised in that** said precursor comonomer is an unsaturated amide of the formula $R_3$-C(O)N-$R_4R_5$, where $R_3$ is an aliphatic or alicyclic hydrocarbon group which comprises at least one double bond or alternatively an aromatic hydrocarbon group to which is linked a substituent comprising at least one double bond, and where $R_4$ and $R_5$ are alkyl groups which are each linked to the nitrogen atom.

**8.** A rubber composition according to Claim 7, **characterised in that** said precursor comonomer belongs to the group consisting of acrylamide, methacrylamide, N,N-dimethylacrylamide, N,N-dimethylmethacrylamide, N-methylcinnamide, N-tert. butylcinnamide and N,N-dimethylcinnamide.

**9.** A rubber composition according to Claim 3, **characterised in that** said precursor comonomer is an unsaturated nitrile of the formula $R_6$-CN, where $R_6$ is an aliphatic or alicyclic hydrocarbon group which comprises at least one double bond, or alternatively an aromatic hydrocarbon group to which is linked a substituent comprising at least one double bond.

**10.** A rubber composition according to Claim 9, **characterised in that** said precursor comonomer belongs to the group consisting of acrylonitrile, methacrylonitrile, vinylacetonitrile and 3-phenyl propenitrile.

**11.** A rubber composition according to Claim 3, **characterised in that** said precursor comonomer is an unsaturated dicarboxylic acid anhydride which comprises at least one double bond.

**12.** A rubber composition according to Claim 11, **characterised in that** said precursor comonomer belongs to the group consisting of maleic anhydride and citraconic anhydride.

**13.** A rubber composition according to Claim 1 or 2, **characterised in that** said precursor comonomer is oxidisable to carboxylic acid and belongs to the group consisting of:

u nsaturated alcohols of the formula $R_7$-OH, where $R_7$ is an aliphatic or alicyclic hydrocarbon group which comprises at least one double bond, or alternatively an aromatic hydrocarbon group to which is linked a substituent comprising at least one double bond, and
u nsaturated aldehydes of the formula $R_8$-CHO, where $R_8$ is an aliphatic or alicyclic hydrocarbon group which comprises at least one double bond, or alternatively an aromatic hydrocarbon group to which is linked a substituent comprising at least one double bond.

**14.** A rubber composition according to Claim 13, **characterised in that** said precursor comonomer is an unsaturated alcohol belonging to the group consisting of allyl alcohol, crotyl alcohol, methallyl alcohol and cinnamyl alcohol.

**15.** A rubber composition according to Claim 13, **characterised in that** said precursor comonomer is an unsaturated aldehyde belonging to the group consisting of crotonaldehyde and cinnamaldehyde.

**16.** A rubber composition according to one of the preceding claims, **characterised in that** said diene elastomer comprises a molar ratio of units originating from conjugated dienes which is greater than 50%.

**17.** A rubber composition according to Claim 16, **characterised in that** said diene elastomer belongs to the family consisting of polybutadienes, butadiene/styrene copolymers and butadiene/styrene/isoprene copolymers.

**18.** A rubber composition according to one of the preceding claims, **characterised in that** said diene elastomer having carboxylic acid functions along the chain comprises a total quantity of emulsifying agent which is less than 3.5 phr (phr: parts by weight per hundred parts of elastomer).

**19.** A rubber composition according to one of the preceding claims, **characterised in that** said diene elastomer having carboxylic acid functions along the chain is extended using a paraffinic, aromatic or naphthenic oil, with a quantity of extender oil of between 0 and 50 phr.

**20.** A rubber composition according to one of the preceding claims, **characterised in that** said diene elastomer having carboxylic acid functions along the chain has a molecular weight greater than 100,000 g/mol.

**21.** A rubber composition according to one of the preceding claims, **characterised in that** said reinforcing inorganic filler is present in said rubber composition in a quantity equal to or greater than 40 phr (phr: parts by weight per hundred parts of diene elastomer(s)).

**22.** A rubber composition according to one of the preceding claims, **characterised in that** it comprises a reinforcing filler comprising in a majority proportion or exclusively said reinforcing inorganic filler, such that the mass fraction of said reinforcing inorganic filler in said reinforcing filler is greater than 50% and less than or equal to 100%.

**23.** A rubber composition according to one of Claims 1 to 22, **characterised in that** said reinforcing inorganic filler comprises in part or in its entirety silica.

**24.** A rubber composition according to one of Claims 1 to 22, **characterised in that** said reinforcing inorganic filler comprises in part or in its entirety alumina.

**25.** A rubber composition according to one of Claims 1 to 22, **characterised in that** said reinforcing inorganic filler comprises in part or in its entirety carbon black surface-modified by silica.

**26.** A process for the preparation of a cross-linkable or cross-linked rubber composition according to one of the preceding claims, **characterised in that** it comprises the following steps:

(i) at least one diene elastomer comprising carboxylic acid functions along the chain and having a molar ratio of units originating from conjugated dienes which is greater than 30% is prepared in emulsion, using:

- in an emulsifying solution, radical copolymerisation of at least one conjugated diene monomer with a precursor comonomer which is hydrolysable or oxidisable to carboxylic acid, in order to obtain an intermediate diene elastomer comprising precursor functions of said acid along its chain, then
- hydrolysis or oxidation of said precursor functions in order to obtain said elastomer comprising carboxylic acid functions along the chain; and

(ii) there is then effected:

- at a maximum temperature of between 130 and 200°C, a first phase of thermomechanical working of the constituents of said composition comprising the elastomer obtained in step (i), a reinforcing inorganic filler and a reinforcing inorganic filler/diene elastomer bonding agent comprising a polysulphurised alkoxysilane, with the exception of the cross-linking system based either on sulphur and/or on peroxide and/or on bismaleimides, then
- a second phase of mechanical working at a temperature less than 120°C, during which said cross-linking system based either on sulphur and/or on peroxide and/or on bismaleimides is incorporated.

**27.** A process for the preparation of a rubber composition according to Claim 26, said first phase of thermomechanical working comprising:

- a first step in which said constituents used in said first phase, with the exception of the antioxidant, are mixed together, and

- a second step in which the antioxidant is incorporated and mixed with the constituents of said first step,

zinc monoxide being added during said first phase to activate the later cross-linking, **characterised in that** all said zinc monoxide is incorporated during said first step of said first phase of thermomechanical working.

**28.** A process for the preparation of a rubber composition according to Claim 26 or 27, said first phase of thermomechanical working comprising:

- a first step in which said constituents used in said first phase, with the exception of the antioxidant, are mixed together, and
- a second step in which the antioxidant is incorporated and mixed with the constituents of said first step,

zinc monoxide being added during said first phase to activate the later cross-linking, **characterised in that** it consists of incorporating magnesium monoxide during said first step of said first phase of thermomechanical working.

**29.** A tread for a tyre, **characterised in that** it comprises a cross-linkable or cross-linked rubber composition in accordance with one of Claims 1 to 25.

**30.** A tyre tread according to Claim 29, **characterised in that** it is formed of said cross-linkable or cross-linked rubber composition.

**31.** A tyre having reduced rolling resistance, **characterised in that** it comprises a tread according to Claim 29 or 30.

## Patentansprüche

**1.** Vernetzbare oder vernetzte Kautschukzusammensetzung, die zur Bildung einer Reifenlauffläche verwendbar ist, wobei die Zusammensetzung eine Zusammensetzung auf der Basis mindestens von Folgendem ist:

- eines verstärkenden anorganischen Füllstoffs,
- eines Vernetzungssystems auf der Basis von Schwefel und/oder Peroxid und/oder von Bismaleimiden,
- eines Dienelastomers mit einem molaren Anteil an Einheiten, die von konjugierten Dienen stammen, von über 30 %, welches in Emulsion hergestellt wird und welches Carbonsäurefunktionen entlang seiner Kette aufweist, das allein vorhanden ist oder im Verschnitt mit einem anderen herkömmlichen Elastomer verwendet wird, das in einer Menge vorhanden ist, die 0 bis 70 Gewichtsanteile pro 100 Gewichtsanteile des Dienelastomers mit Carbonsäurefunktionen entlang der Kette beträgt, wobei dieses andere herkömmliche Elastomer ausgewählt ist aus Naturkautschuk, einem Verschnitt auf der Basis von Naturkautschuk und einem synthetischen Elastomer, und einem anderen Dienelastomer, das eventuell gekoppelt und/oder ein Sternelastomer ist oder auch teilweise oder vollständig auf andere Weise als mit COOH-Funktionen entlang der Kette funktionalisiert ist, und
- eines Bindemittels für die Bindung zwischen dem verstärkenden anorganischen Füllstoff und dem Elastomer, welches ein polysulfidhaltiges Alkoxysilan umfasst,

wobei das Elastomer erhältlich ist, indem Folgendes durchgeführt wird:

(a) in einer Emulgatorlösung, eine radikalische Copolymerisation mindestens eines konjugierten Dienmonomers mit einem Precursor-Comonomer, welches in Carbonsäure hydrolysierbar oder oxidierbar ist, um ein Zwischen-Dienelastomer zu erhalten, das Precursor-Funktionen dieser Säure entlang seiner Kette aufweist, und danach
(b) eine Hydrolyse oder eine Oxidation der Precursor-Funktionen, um das Elastomer zu erhalten, welches Carbonsäurefunktionen entlang der Kette aufweist.

**2.** Kautschukzusammensetzung nach Anspruch 1, **dadurch gekennzeichnet, dass** das Dienelastomer aus der Gruppe ausgewählt ist, die aus den Homopolymeren, die durch Polymerisation eines konjugierten Dienmonomers mit 4 bis 12 Kohlenstoffatomen erhalten werden, oder den Copolymeren, die durch Copolymerisation eines oder mehrerer konjugierter Diene untereinander oder mit einer oder mehreren aromatischen Vinylverbindungen mit 8 bis 20 Kohlenstoffatomen erhalten werden, und den Gemischen von zwei oder mehr von diesen Polymeren besteht.

**3.** Kautschukzusammensetzung nach Anspruch 1 oder 2, **dadurch gekennzeichnet, dass** das Precursor-Comonomer ein Derivat einer ungesättigten Carbonsäure ist, welches hydrolysierbar ist, um die Säure zu bilden.

4. Kautschukzusammensetzung nach Anspruch 3, **dadurch gekennzeichnet, dass** das Precursor-Comonomer ein ungesättigter Ester mit der Formel $R_1$-C(O)O-$R_2$ ist, wobei $R_1$ eine aliphatische oder alicyclische Kohlenwasserstoffgruppe ist, die mindestens eine Doppelbindung aufweist, oder auch eine aromatische Kohlenwasserstoffgruppe, an die ein Substituent gebunden ist, der mindestens eine Doppelbindung aufweist, und wobei $R_2$ eine Alkylgruppe ist.

5. Kautschukzusammensetzung nach Anspruch 4, **dadurch gekennzeichnet, dass** das Precursor-Comonomer zu der Gruppe gehört, die aus den Alkylacrylaten, den Alkylmethacrylaten und den Alkyl-trans-phenyl-3-propenoaten besteht.

6. Kautschukzusammensetzung nach Anspruch 5, **dadurch gekennzeichnet, dass** das Precursor-Comonomer ein tert-Butylacrylat oder ein tert-Butylmethacrylat ist.

7. Kautschukzusammensetzung nach Anspruch 3, **dadurch gekennzeichnet, dass** das Precursor-Comonomer ein ungesättigtes Amid mit der Formel $R_3$-C(O)N-$R_4R_5$ ist, wobei $R_3$ eine aliphatische oder alicyclische Kohlenwasserstoffgruppe ist, die mindestens eine Doppelbindung aufweist, oder auch eine aromatische Kohlenwasserstoffgruppe, an die ein Substituent gebunden ist, der mindestens eine Doppelbindung aufweist, und wobei $R_4$ und $R_5$ Alkylgruppen sind, die jeweils an das Stickstoffatom gebunden sind.

8. Kautschukzusammensetzung nach Anspruch 7, **dadurch gekennzeichnet, dass** das Precursor-Comonomer zu der Gruppe gehört, die aus Acrylamid, Methacrylamid, N,N-Dimethylacrylamid, N,N-Dimethylmethacrylamid, N-Methylcinnamid, N-tert-Butylcinnamid und N,N-Dimethylcinnamid besteht.

9. Kautschukzusammensetzung nach Anspruch 3, **dadurch gekennzeichnet, dass** das Precursor-Comonomer ein ungesättigtes Nitril mit der Formel $R_6$-CN ist, wobei $R_6$ eine aliphatische oder alicyclische Kohlenwasserstoffgruppe ist, die mindestens eine Doppelbindung aufweist, oder auch eine aromatische Kohlenwasserstoffgruppe, an die ein Substituent gebunden ist, der mindestens eine Doppelbindung aufweist.

10. Kautschukzusammensetzung nach Anspruch 9, **dadurch gekennzeichnet, dass** das Precursor-Comonomer zu der Gruppe gehört, die aus Acrylnitril, Methacrylnitril, Vinylacetonitril und Phenyl-3-propennitril besteht.

11. Kautschukzusammensetzung nach Anspruch 3, **dadurch gekennzeichnet, dass** das Precursor-Comonomer ein ungesättigtes Dicarbonsäureanhydrid ist, das mindestens eine Doppelbindung aufweist.

12. Kautschukzusammensetzung nach Anspruch 11, **dadurch gekennzeichnet, dass** das Precursor-Comonomer zu der Gruppe gehört, die aus Maleinsäureanhydrid und Citronensäureanhydrid besteht.

13. Kautschukzusammensetzung nach Anspruch 1 oder 2, **dadurch gekennzeichnet, dass** das Precursor-Comonomer in Carbonsäure oxidierbar ist und zu der Gruppe gehört, welche besteht aus:

- den ungesättigten Alkoholen mit der Formel $R_7$-OH, wobei $R_7$ eine aliphatische oder alicyclische Kohlenwasserstoffgruppe ist, die mindestens eine Doppelbindung aufweist, oder auch eine aromatische Kohlenwasserstoffgruppe, an die ein Substituent gebunden ist, der mindestens eine Doppelbindung aufweist, und
- den ungesättigten Aldehyden mit der Formel $R_8$-CHO, wobei $R_8$ eine aliphatische oder alicyclische Kohlenwasserstoffgruppe ist, die mindestens eine Doppelbindung aufweist, oder auch eine aromatische Kohlenwasserstoffgruppe, an die ein Substituent gebunden ist, der mindestens eine Doppelbindung aufweist.

14. Kautschukzusammensetzung nach Anspruch 13, **dadurch gekennzeichnet, dass** das Precursor-Comonomer ein ungesättigter Alkohol ist, der zu der Gruppe gehört, die aus Allylalkohol, Crotylalkohol, Methallylalkohol und Cinnamylalkohol besteht.

15. Kautschukzusammensetzung nach Anspruch 13, **dadurch gekennzeichnet, dass** das Precursor-Comonomer ein ungesättigtes Aldehyd ist, das zu der Gruppe gehört, die aus Crotonaldehyd und Cinnamaldehyd besteht.

16. Kautschukzusammensetzung nach einem der vorhergehenden Ansprüche, **dadurch gekennzeichnet, dass** das Dienelastomer einen molaren Anteil an Einheiten, die von konjugierten Dienen stammen, aufweist, welcher höher als 50 % ist.

17. Kautschukzusammensetzung nach Anspruch 16, **dadurch gekennzeichnet, dass** das Dienelastomer zu der Familie gehört, die aus den Polybutadienen, den Butadien-Styrol-Copolymeren und den Butadien-Styrol-Isopren-Copolymeren besteht.

18. Kautschukzusammensetzung nach einem der vorhergehenden Ansprüche, **dadurch gekennzeichnet, dass** das Dienelastomer mit Carbonsäurefunktionen entlang der Kette eine Gesamtmenge an Emulgator umfasst, welche kleiner als 3,5 pce ist (pce: Gewichtsanteile pro einhundert Elastomeranteile).

19. Kautschukzusammensetzung nach einem der vorhergehenden Ansprüche, **dadurch gekennzeichnet, dass** das Dienelastomer, das Carbonsäurefunktionen entlang der Kette aufweist, mit einem Paraffinöl, aromatischen oder naphthenischen Öl gestreckt ist, mit einer Menge an Strecköl zwischen 0 und 50 pce.

20. Kautschukzusammensetzung nach einem der vorhergehenden Ansprüche, **dadurch gekennzeichnet, dass** das Dienelastomer, das Carbonsäurefunktionen entlang der Kette aufweist, eine molare Masse von mehr als 100 000 g/mol aufweist.

21. Kautschukzusammensetzung nach einem der vorhergehenden Ansprüche, **dadurch gekennzeichnet, dass** der verstärkende anorganische Füllstoff in der Kautschukzusammensetzung in einer Menge vorhanden ist, die gleich oder größer als 40 pce ist (pce: Gewichtsanteile pro einhundert Anteile an Dienelastomer(en)).

22. Kautschukzusammensetzung nach einem der vorhergehenden Ansprüche, **dadurch gekennzeichnet, dass** sie einen verstärkenden Füllstoff aufweist, der überwiegend oder ausschließlich den verstärkenden anorganischen Füllstoff umfasst, derart, dass der Massenanteil des verstärkenden anorganischen Füllstoffs in dem verstärkenden Füllstoff größer als 50 % und kleiner als oder gleich 100 % ist.

23. Kautschukzusammensetzung nach einem der Ansprüche 1 bis 22, **dadurch gekennzeichnet, dass** der verstärkende anorganische Füllstoff teilweise oder vollständig aus Siliciumdioxid besteht.

24. Kautschukzusammensetzung nach einem der Ansprüche 1 bis 22, **dadurch gekennzeichnet, dass** der verstärkende anorganische Füllstoff teilweise oder vollständig aus Aluminiumoxid besteht.

25. Kautschukzusammensetzung nach einem der Ansprüche 1 bis 22, **dadurch gekennzeichnet, dass** der verstärkende anorganische Füllstoff teilweise oder vollständig aus Ruß besteht, der mit Siliciumdioxid oberflächenmodifiziert ist.

26. Verfahren zur Herstellung einer vernetzbaren oder vernetzten Kautschukzusammensetzung nach einem der vorhergehenden Ansprüche, **dadurch gekennzeichnet, dass** es die folgenden Schritte aufweist:

(i) Herstellen, in Emulsion, mindestens eines Dienelastomers, welches Carbonsäurefunktionen entlang seiner Kette aufweist und einen molaren Anteil an von konjugierten Dienen stammenden Einheiten aufweist, welcher höher als 30 % ist, indem Folgendes durchgeführt wird:

- in einer Emulgatorlösung, eine radikalische Copolymerisation mindestens eines konjugierten Dienmonomers mit einem Precursor-Comonomer, welches in Carbonsäure hydrolysierbar oder oxidierbar ist, um ein Zwischen-Dienelastomer zu erhalten, das Precursor-Funktionen dieser Säure entlang seiner Kette aufweist, und danach
- eine Hydrolyse oder eine Oxidation der Precursor-Funktionen, um das Elastomer zu erhalten, welches Carbonsäurefunktionen entlang der Kette aufweist; und

(ii) anschließendes Durchführen:

- bei einer maximalen Temperatur zwischen 130 und 200 °C, einer ersten, thermomechanischen Arbeitsphase zur Verarbeitung der Bestandteile der Zusammensetzung, welche das in Schritt (i) überwiegend oder ausschließlich erhaltene Elastomer, einen verstärkenden anorganischen Füllstoff und ein Bindemittel "verstärkender anorganischer Füllstoff/Dienelastomer", welches ein polysulfidhaltiges Alkoxysilan enthält, umfasst, nicht jedoch das Vernetzungssystem auf der Basis von Schwefel und/oder von Peroxid und/oder von Bismaleimiden, und danach
- einer zweiten, mechanischen Arbeitsphase bei einer Temperatur unter 120 °C, in deren Verlauf das Vernetzungssystem auf der Basis von Schwefel und/oder von Peroxid und/oder von Bismaleimiden beigemischt wird.

**27.** Verfahren zur Herstellung einer Kautschukzusammensetzung nach Anspruch 26, wobei die erste, thermomechanische Arbeitsphase Folgendes aufweist:

- einen ersten Schritt, in welchem die Bestandteile, die in der ersten Phase verwendet werden, miteinander vermischt werden, mit Ausnahme des Antioxidationsmittels, und
- einen zweiten Schritt, in welchem das Antioxidationsmittel beigemischt und mit den Bestandteilen des ersten Schritts vermischt wird,

wobei während der ersten Phase Zinkmonoxid zugegeben wird, um die spätere Vernetzung zu aktivieren, **dadurch gekennzeichnet, dass** die gesamte Menge des Zinkmonoxids während des ersten Schritts der ersten, thermomechanischen Arbeitsphase beigemischt wird.

**28.** Verfahren zur Herstellung einer Kautschukzusammensetzung nach Anspruch 26 oder 27, wobei die erste, thermomechanische Arbeitsphase Folgendes aufweist:

- einen ersten Schritt, in welchem die Bestandteile, die in der ersten Phase verwendet werden, miteinander vermischt werden, mit Ausnahme des Antioxidationsmittels, und
- einen zweiten Schritt, in welchem das Antioxidationsmittel beigemischt und mit den Bestandteilen des ersten Schritts vermischt wird,

wobei während der ersten Phase Zinkmonoxid zugegeben wird, um die spätere Vernetzung zu aktivieren, **dadurch gekennzeichnet, dass** es darin besteht, Magnesiummonoxid während des ersten Schritts der ersten, thermomechanischen Arbeitsphase beizumischen.

**29.** Reifenlauffläche, **dadurch gekennzeichnet, dass** sie eine vernetzbare oder vernetzte Kautschukzusammensetzung nach einem der Ansprüche 1 bis 25 umfasst.

**30.** Reifenlauffläche nach Anspruch 29, **dadurch gekennzeichnet, dass** sie aus der vernetzbaren oder vernetzten Kautschukzusammensetzung besteht.

**31.** Reifenmantel, der einen verringerten Rollwiderstand aufweist, **dadurch gekennzeichnet, dass** er eine Lauffläche nach Anspruch 29 oder 30 aufweist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3135716 A
- US 3244664 A
- US 5066721 A
- FR 2740778 A
- EP 877047 A
- EP 692493 A
- US 3978161 A
- US 3976628 A
- US 4912145 A
- US 4082817 A
- US 5494091 A
- WO 0114470 A
- EP 0704481 A
- WO 0156812 A
- CN 1208736 A
- CN 1128765 A
- EP 1141085 A
- EP 0735088 A
- WO 9637547 A
- EP 810258 A
- WO 9928376 A
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- EP 1043357 A
- EP 0203774 W


### Littérature non-brevet citée dans la description


- **K. SANUI ; R.W. LENZ ; W.J. MACKNIGHT.** *J. Poly. Sci., Polym. Chem. Ed.,* 1974, vol. 12, 1965
- **H. TANAKA ; W.J. MACKNIGHT.** *J. Poly. Sci., Polym. Chem. Ed.,* 1979, vol. 17, 2975
- **A. NAIT AJJOU ; H. ALPER.** *Macromolecules,* 1996, vol. 29, 1784
- **P. A. LOVELL ; M. S. EL-AASSER.** Emulsion Polymerization and Emulsion Polymers. John Wiley and Sons, 1997, 558-561
- catalytic oxydation of polyols by molecular oxygen in alkaline media. *Kinet. Catal.,* 1996, vol. 37 (3), 368-376
- **BRUNAUER-EMMET-TELLER.** *The Journal of the American Chemical Society,* Février 1938, vol. 60, 309